# EUROPÄISCHE PATENTANMELDUNG

(11) **EP 2 492 089 A1**
(43) Veröffentlichungstag der Anmeldung: **29.08.2012**
(21) Anmeldenummer: 11001574.0
(22) Anmeldetag: 25.02.2011
(51) Int. Cl.: B32B 7/06, B65D 65/40, B65D 77/20

(54) **Verbundfolie**

(71) Anmelder: Amcor Flexibles Singen GmbH, 78224 Singen (Hohentwiel) (DE)
(72) Erfinder: Dietrich, Christoph, 78224 Singen (DE); Hafner, Klaus, 78567 Friedingen (DE); Bauer, Sven, 78256 Steisslingen (DE)
(74) Vertreter: Gernet, Samuel Andreas

(57) **Zusammenfassung**

Eine Verbundfolie (10) zum Verschliessen eines Behälters durch Siegelung der Verbundfolie gegen eine umlaufende Siegelfläche des Behälters oder eines mit dem Behälter zu verbindenden Deckelrings weist eine Trägerschicht (14) aus einer Metallfolie und eine mit der Metallfolie verbundene Siegelschicht auf. Die Siegelschicht umfasst eine Coextrusionsschicht mit einer kohäsiv brechenden Mittelschicht (18) und auf beiden Seiten der Mittelschicht (18) angeordneten Haftvermittlerschichten (16, 20). Die Verbundfolie eignet sich zum Dichtsiegeln gegen Siegelflächen aus blankem Weissblech.

## Beschreibung

Die Erfindung betrifft eine Verbundfolie mit einer Trägerschicht aus einer Metallfolie und einer mit der Metallfolie verbundenen Siegelschicht zum Verschliessen eines Behälters durch Siegelung der Verbundfolie gegen eine umlaufenden Siegelfläche des Behälters oder eines mit dem Behälter zu verbindenden Deckelrings. Im Rahmen der Erfindung liegt auch ein Behälter oder ein Deckelring zum Verbinden mit einem Behälter, mit einer umlaufenden Siegelfläche aus blankem Weissblech, mit einer auf die Siegelfläche gesiegelten, von der Siegelfläche peelbaren Verschlussmembran aus der Verbundfolie.

Verschlussmembranen aus einer Verbundfolie mit einer Trägerschicht aus einer Aluminiumfolie und einer mit der Aluminiumfolie verbundenen Siegelschicht zum Verschliessen eines Behälters durch Siegelung der Verbundfolie gegen eine umlaufende Siegelfläche des Behälters oder eines mit dem Behälter zu verbindenden Deckelrings sind bekannt.

Zum dichten Verschliessen von Behältern aus Weissblech oder von Behältern mit einem Deckelring aus Weissblech durch Aufsiegeln einer Verschlussmembran auf eine umlaufende Siegelfläche musste die Siegelfläche, bis anhin mit einer heisssiegelfähigen Beschichtung versehen sein, um die Siegelung der Verschlussmembran widerstandsfähig gegen Temperaturschwankungen und Druckschwankungen im Doseninneren zu machen.

Der Erfindung liegt die Aufgabe zugrunde, eine als Verschlussmembran für einen Behälter oder einen mit einem Behälter zu verbindenden Deckelring geeignete Verbundfolie zu schaffen, welche eine robuste Dichtsiegelung sowohl gegen unbeschichtete metallische Siegelflächen, insbesondere Siegelflächen aus blankem Weissblech oder blankem Aluminium, als auch gegen heisssiegelbar modifizierte Siegelflächen ermöglicht. Ein weiteres Ziel der Erfindung ist die gleichzeitige Bereitstellung einer leicht erkennbaren Erstöffnungsgarantie in der Form eines "Footprint". Als Footprint wird ein vom Siegelmedium der Verschlussmembran auf dem Siegelpartner zurück bleibender, visuell erkennbarer Anteil bezeichnet.

Zur erfindungsgemässen Lösung der Aufgabe führt, dass die Siegelschicht eine Coextrusionsschicht mit einer kohäsiv brechenden Mittelschicht und auf beiden Seiten der Mittelschicht angeordneten Haftvermittlerschichten umfasst.

Die Mittelschicht kann eine oder mehrere Schichten umfassen.

Als Haftvermittler wird bevorzugt ein mit Maleinsäureanhydrid modifiziertes Polypropylen (MAH-PP) und als Mittelschicht ein thermoplastischer Kunststoff mit Polypropylen (PP) als wesentlichem Bestandteil eingesetzt.

Beim Lösen einer aus der erfindungsgemässen Verbundfolie hergestellten und gegen eine umlaufenden Siegelfläche eines Behälters oder eines mit dem Behälter verbundenen Deckelrings gesiegelten Verschlussmembran erfolgt die Materialtrennung innerhalb der kohäsiv brechenden Mittelschicht, die zu einem Teil auf der Siegelfläche des Behälters oder des Deckelrings in der Form eines gleichmässigen, sichtbaren Footprints zurückbleibt. Dieser charakteristische Footprint dient zur sofortigen Erkennung gefälschter oder manipulierter Verpackungen und kann somit als Erstöffnungsgarantie eingesetzt werden. Des weiteren zeigt er dem Endkunden, dass die Verpackung sicher und hermetisch versiegelt war.

Die Metallfolie, insbesondere eine Aluminiumfolie, weist bevorzugt eine Dicke von 20 bis 160 µm, insbesondere 50 bis 100 µm, die Haftvermittlerschicht eine Dicke von 1 bis 10 µm, und die kohäsiv brechende Mittelschicht eine Dicke von 5 bis 60 µm auf.

Die Aluminiumfolie kann aus den für Verschlussmembranen üblichen Aluminiumlegierungen, wie z. B. EN AW 8011 und EN AW 8021, oder aus Aluminium mit üblichem Reinheitsgrad, z. B. Al 98,6 bestehen. Bevorzugt wird eine weichgeglühte Aluminiumfolie eingesetzt.

Die der Siegelschicht abgewandte, die Aussenseite bildende Seite der Aluminiumfolie kann beispielsweise mit einem Schutzlack, einer kaschierten Kunststofffolie oder Papier, oder mit einem Aufdruck versehen sein.

Eine besonders bevorzugte, kohäsiv brechende Mittelschicht enthält einen Zusatz von Talk, wobei der Talkanteil bevorzugt 5 bis 60 Gew.-%, insbesondere 10 bis 30 Gew.-%, der kohäsiv brechenden Mittelschicht beträgt.

Die kohäsiv brechende Mittelschicht kann neben dem Polypropylen (PP) als Hauptbestandteil zusätzlich noch 5 bis 35 Gew.-% Polyethylen (PE) enthalten.

Die Verbundfolie eignet sich insbesondere zum Verschliessen eines Behälters durch Siegelung der Verbundfolie gegen eine umlaufenden Siegelfläche des Behälters oder eines mit dem Behälter zu verbindenden Deckelrings, wobei die Siegelfläche aus blankem Weissblech besteht.

Ein bevorzugtes blankes Weissblech ist mit einer Tauchpassivierung (Code 300), einer kathodischen Passivierung (Code 311) oder mit einer elektrochemischen Passivierung (Code 314) versehen.

Ein wesentliches Kriterium der erfindungsgemässen Folie ist deren kostengünstige Herstellbarkeit durch eine mehrschichtige Coextrusion der aus einer beidseitig mit je einer Haftvermittlerschicht belegten Mittelschicht bestehenden Siegelschicht, wobei das Coextrudat bevorzugt unmittelbar nach dem Extrusionsvorgang mit der Trägerschicht zur erfindungsgemässen Verbundfolie zusammengeführt wird.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: den Aufbau einer erfindungsgemässe Verbundfolie;
- Fig. 2: einen Schnitt durch einen Deckelring mit Verschlussmembran;
- Fig. 3: einen Schnitt durch den Öffnungsbereich eines Behälters mit einer auf die Aussenseite des Behälters gesiegelten Verschlussmembran;
- Fig. 4: einen Schnitt durch den Öffnungsbereich eines Behälters mit einer auf die Innenseite des Behälters gesiegelten Verschlussmembran.

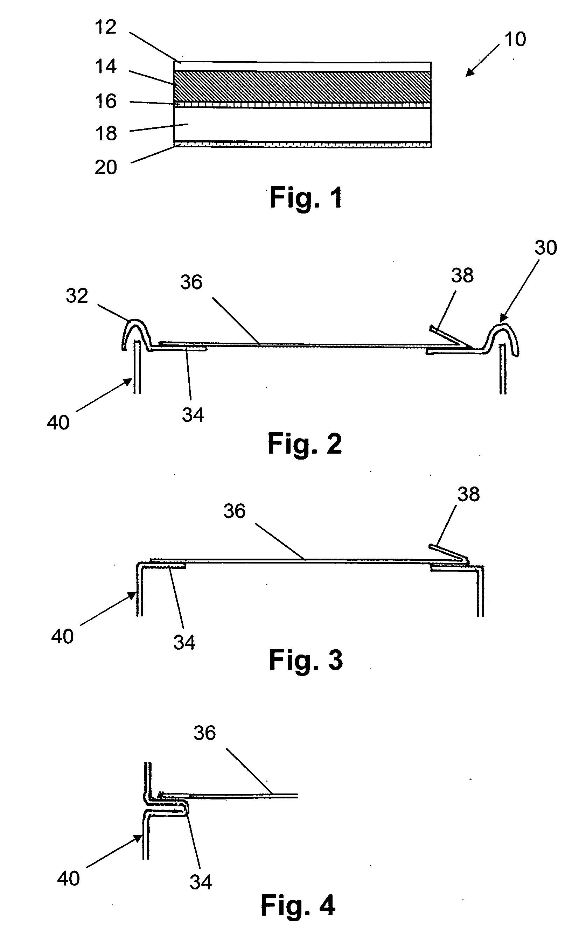

Eine in Fig. 1 gezeigte Verbundfolie 10 weist folgenden Aufbau auf:
- 12: Schutzlack
- 14: Aluminiumfolie
- 16: Haftvermittler aus PP-MAH
- 18: Mittelschicht aus PP / PE mit 5 bis 60 % Talk
- 20: Haftvermittler aus PP-MAH

Der Schutzlack 12 ist an einem mit der Verbundfolie 10 verschlossenen Behälter gegen die Behälteraussenseite, die Mittelschicht 18 mit dem Haftvermittler 20 gegen die Behälterinnenseite gerichtet.

Ein in Fig. 2 dargestellter Deckelring 30 aus Weissblech mit einem Bördelrand 32 zum Aufbördeln auf den Öffnungsrand eines Behälters 40 weist eine ringförmig umlaufende, von Bördelrand 32 horizontal nach innen abragende Siegelfläche 34 auf. Die Siegelfläche 34 ist unbeschichtet, d. h., die Siegelfläche 34 weist, wie der übrige Deckelring, eine blanke Oberfläche auf.

Eine aus der Verbundfolie 10 ausgestanzte, mit einer Aufreisslasche 38 ausgestattete Verschlussmembran 36 ist auf die Siegelfläche 34 gesiegelt. Beim Peelen der Verschlussmembran 36 bricht die Mittelschicht 18 kohäsiv und ein Teil der Mittelschicht 18 bleibt als "Footprint" auf der Siegelfläche 34 zurück.

In Fig. 3 ist die Siegelfläche 34 integraler Teil des aus Weissblech gefertigten Behälters 40. Die Siegelfläche 34 ist hier direkt aus dem Behälter 40 geformt und als horizontal einwärts gerichteter Ringflansch ausgebildet, Die Aussenseite des Behälters 40 und damit auch die Siegelfläche 34 ist unbeschichtet, d. h., die Siegelfläche 34 weist eine blanke Weissblechoberfläche auf. Wie vorstehend für den Deckelring 30 beschrieben, bleibt auch hier auf der Siegelfläche 34 beim Öffnen durch Peelen die Mittelschicht 18 infolge des kohäsiven Bruchs als "Footprint" auf der Siegelfläche 34 zurück.

In Fig. 4 ist die Siegelfläche 34 integraler Teil des aus Weissblech gefertigten Behälters 40. Die Siegelfläche 34 ist hier direkt aus dem Behälter 40 geformt und als horizontal einwärts gerichteter Ringflansch ausgebildet, Die Innenseite des Behälters 40 und damit auch die Siegelfläche 34 ist unbeschichtet, d. h., die Siegelfläche 34 weist eine blanke Weissblechoberfläche auf. Wie vorstehend für den Deckelring 30 beschrieben, bleibt auch hier auf der Siegelfläche 34 beim Öffnen durch Peelen die Mittelschicht 18 infolge des kohäsiven Bruchs als "Footprint" auf der Siegelfläche 34 zurück.

Beim Lösen der gegen den die Siegelfläche 34 gesiegelten Verschlussmembran 36 durch Ziehen an der Aufreisslasche 38 erfolgt die Materialtrennung im Innern der Mittelschicht 18. Nach dem vollständigen Entfernen der Verschlussmembran 36 zum erstmaligen Öffnen des Behälters 40 bleibt ein Teil der Mittelschicht 18 als gleichmässiger Belag auf der Siegelfläche 34 zurück. Dieser Belag oder Footprint wird als einfacher und ohne weitere Hilfsmittel erkennbarer Hinweis auf eine Originalpackung mit Erstöffnungsgarantie verwendet.

### Versuchsbeispiele

An Verbundfolien mit den folgenden Schichtaufbauten wurden Versuche zur Haftfestigkeit auf Weissblech mit blanker und lackierter Oberfläche und zum Peelverhalten durchgeführt.
A.
   1,5 µm Schutzlack
   60 µm Aluminiumfolie EN AW-8021/AlFe1,5 weichgeglüht
   4,5 µm PP-MAH
   11 µm PP mit 40 % Talk + LDPE
   1,5 µm PP-MAH
B.
   1,5 µm Schutzlack
   90 µm Aluminiumfolie EN AW-8011 (A)/AlFeSi (A) weichgeglüht
   4,5 µm PP-MAH
   11 µm PP mit 40 % Talk + LDPE
   1,5 µm PP-MAH
C.
   1,5 µm Schutzlack
   60 µm Aluminiumfolie EN AW-8021/AlFe1,5 weichgeglüht
   1,5 µm PP-MAH
   11 µm PP mit 40 % Talk + LDPE
   4,5 µm PP-MAH
D.
   1,5 µm Schutzlack
   90 µm Aluminiumfolie EN AW-8011 (A)/AlFeSi (A)
   1,5 µm PP-MAH
   11 µm PP mit 40% Talk + LDPE
   4,5 µm PP-MAH
E.
   1,5 µm Schutzlack
   60 µm Aluminiumfolie EN AW-8021/AlFe1,5 weichgeglüht
   4,0 µm PP-MAH
   11 µm PP mit 40 % Talk + LDPE
   2,0 µm PP-MAH
F.
   1,5 µm Schutzlack
   60 µm Aluminiumfolie EN AW-8021/AlFe1,5 weichgeglüht
   8,0 µm PP-MAH
   11 µm PP mit 40 % Talk + LDPE
   4,0 µm PP-MAH

Zur Bestimmung der Siegelnahtfestigkeit wurden die Verbundfolien einem Peeltest unterworfen. Die Verbundfolien wurden unter vergleichbaren Siegelbedingungen in der Form 15 mm breiter Streifen gegen eine Weissblechoberfläche gesiegelt.

Als Mass für die Siegelnahtfestigkeit wurde die zum Ablösen der Streifen von der Blechunterlage erforderliche Kraft bestimmt. Der Abzugwinkel der Streifen gegen die auf einem Schlitten verfahrbare Weissblechoberfläche betrug jeweils 90°.

Alle Verbundfolien mit dem erfindungsgemässen Aufbau zeigten bei den Peelversuchen mit blankem Weissblech vergleichbare Peelkräfte bzw. Siegelnahtfestigkeiten. Der als Footprint auf dem Weissblech zurückbleibende Belag war in allen untersuchten Fällen weiss. Vergleichsversuche mit lackiertem Weissblech als Referenz haben gezeigt, dass mit blankem Weissblech vergleichbare Siegelnahtfestigkeiten erzielt werden.

Peelversuche mit Weissblech mit unterschiedlichen Passivierungen haben keine Unterschiede in der Siegelnahtfestigkeit bei den üblichen Passivierungen gemäss den Codes 300, 311 und 314 gezeigt. Auch die bei den Passivierungen eintretende Alterung hatte keinen Einfluss auf die Siegelnahtfestigkeit, d. h., die Verbundfolie verhält sich gegenüber der Alterung des Weissblechs neutral.

Die Passivierungscodes haben folgende Bedeutung:

| **Passivierung** | **Code** | **Chromauftrag [mg/m²]** |
|---|---|---|
| Tauchpassivierung | 300 | 1-3 |
| Kathodische Passivierung | 311 | 3,5-9 |
| Elektrochemische Passivierung | 314 | >5 |

## Patentansprüche

1. Verbundfolie mit einer Trägerschicht (14) aus einer Metallfolie und einer mit der Metallfolie verbundenen Siegelschicht zum Verschliessen eines Behälters (40) durch Siegelung der Verbundfolie gegen eine umlaufende Siegelfläche (34) des Behälters (40) oder eines mit dem Behälter (40) zu verbindenden Deckelrings (30),
**dadurch gekennzeichnet, dass**
die Siegelschicht eine Coextrusionsschicht mit einer kohäsiv brechenden Mittelschicht (18) und auf beiden Seiten der Mittelschicht (18) angeordneten Haftvermittlerschichten (16, 20) umfasst.

2. Verbundfolie nach Anspruch 1, **dadurch gekennzeichnet, dass** als Haftvermittler ein mit Maleinsäureanhydrid modifiziertes Polypropylen (MAH-PP) und als Mittelschicht ein thermoplastischer Kunststoff mit Polypropylen (PP) als wesentlichem Bestandteil eingesetzt wird.

3. Verbundfolie nach Anspruch 1, **dadurch gekennzeichnet, dass** die Metallfolie, insbesondere eine Aluminiumfolie, eine Dicke von 20 bis 160 µm, insbesondere 50 bis 100 µm, die Haftvermittlerschicht (16, 20) eine Dicke von 1 bis 10 µm, und die kohäsiv brechende Mittelschicht (18) eine Dicke von 5 bis 60 µm aufweist.

4. Verbundfolie nach Anspruch 1, **dadurch gekennzeichnet, dass** die kohäsiv brechende Mittelschicht (18) einen Zusatz von Talk enthält.

5. Verbundfolie nach Anspruch 4, **dadurch gekennzeichnet, dass** der Talkanteil 5 bis 60 Gew.-%, vorzugsweise 10 bis 30 Gew.-% der kohäsiv brechenden Mittelschicht (18) beträgt.

6. Verbundfolie nach Anspruch 1, **dadurch gekennzeichnet, dass** die kohäsiv brechende Mittelschicht (18) 5 bis 35 Gew.-% Polyethylen (PE) enthält.

7. Verwendung einer Verbundfolie nach einem der Ansprüche 1 bis 6 zum Verschliessen eines Behälters (40) durch Siegelung der Verbundfolie gegen eine umlaufenden Siegelfläche (34) des Behälters (40) oder eines mit dem Behälter (40) zu verbindenden Deckelrings (30), wobei die Siegelfläche (34) aus blankem Weissblech besteht.

8. Verwendung einer Verbundfolie nach einem der Ansprüche 1 bis 6 zum Verschliessen eines Behälters (40) durch Siegelung der Verbundfolie gegen eine umlaufenden Siegelfläche (34) des Behälters (40) oder eines mit dem Behälter (40) zu verbindenden Deckelrings (30), wobei die Siegelfläche (34) aus blankem Aluminium besteht.

9. Verwendung einer Verbundfolie nach einem der Ansprüche 1 bis 6 zum Verschliessen eines Behälters (40) durch Siegelung der Verbundfolie gegen eine umlaufenden Siegelfläche (34) des Behälters (40) oder eines mit dem Behälter (40) zu verbindenden Deckelrings (30), wobei die Siegelfläche (34) aus einer heisssiegelbar modifizierten, metallischen Oberfläche besteht.

10. Behälter (40) oder Deckelring (30) zum Verbinden mit einem Behälter (40), mit einer umlaufenden Siegelfläche (34) aus blankem Weissblech, wobei eine von der Siegelfläche (34) peelbare Verschlussmembran (36) aus einer Verbundfolie gemäss einem der Ansprüche 1 bis 6 auf die Siegelfläche (34) gesiegelt ist.

11. Behälter nach Anspruch 10, **dadurch gekennzeichnet, dass** das Weissblech mit einer Tauchpassivierung (Code 300), einer kathodischen Passivierung (Code 311) oder mit einer elektrochemischen Passivierung (Code 314) versehen ist.
